# EUROPEAN PATENT SPECIFICATION

(11) **EP 1 313 182 B1**
(45) Date of publication and mention of the grant of the patent: **15.12.2004**
(21) Application number: 02256863.8
(22) Date of filing: 02.10.2002
(51) Int. Cl.: H01S 3/0941

(54) **System and method for depolarizing optical pump sources**
Depolarisationsverfahren und System für optische Pumpquelle
Syteme et méthode de depolarisation pour des sources à pompage optiques

(30) Priority: 18.10.2001 US 982498
(43) Date of publication of application: 21.05.2003
(73) Proprietor: Tyco Telecommunications (US) Inc., Morristown, NJ 07960 (US)
(72) Inventor: Foursa, Dmitri, Freehold, NJ 07728 (US); Nissov, Morten, Ocean, NJ 07712 (US)
(74) Representative: Brookes Batchellor

(56) References cited:
- EP-A- 0 268 523
- EP-A- 1 081 813
- EP-A- 1 203 971
- YOSHIHIRO EMORI ET AL: "Cost-effective depolarized diode pump unit designed for C-band flat-gain Raman amplifiers to control EDFA gain profile" OPTICAL FIBER COMMUNICATION CONFERENCE. (OFC). TECHNICAL DIGEST POSTCONFERENCE EDITION. BALTIMORE, MD, MARCH 7 - 10, 2000, NEW YORK, NY: IEEE, US, vol. 4 OF 4, 7 March 2000 (2000-03-07), pages 106-108, XP002187327 ISBN: 0-7803-5952-6

## Description

### FIELD OF THE INVENTION

This invention relates in general to optical communication systems, and in particular to a system and method for depolarizing optical amplifier pump sources.

### BACKGROUND OF THE INVENTION

Optical communication networks, in particular long-haul networks of lengths greater than 600 kilometers, inevitably suffer from signal attenuation due to variety of factors including scattering, absorption, and bending. To compensate for losses, optical amplifiers are typically placed at regular intervals, e.g., about every 50 kilometers, along the optical transmission path.

Optical amplifiers include rare earth doped fiber amplifiers such as erbium doped fiber amplifiers (EDFAs), Raman amplifiers, and hybrid Raman/EDFA amplifiers. Examples of such amplifiers are disclosed in prior art documents EP 1 081 813 and EP 0 268 523. An EDFA operates by passing an optical signal through an erbium-doped fiber segment, and "pumping" the segment with light from a pump source such as a laser. The pump source excites erbium atoms in the doped segment, which then serves to amplify the optical signal passing therethrough. In contrast to an EDFA, Raman amplification is more distributed and occurs throughout an optical transmission fiber segment when it is pumped at an appropriate wavelength or wavelengths. Each Raman amplifier may contain one or a plurality of pumps. Gain is then achieved at longer wavelengths through the process of Stimulated Raman Scattering.

Gain imparted by such optical amplifiers may be negatively impacted by polarization of the pump sources. Laser diode pump sources, for example, are typically linearly polarized. Linear polarization is a function of the electric field of a light beam. Such an electric field has one direction of travel coincident with travel of the light beam, and another direction of the electric field vector itself. Linear polarization is a condition in which the electric field vector associated with the light may vary in amplitude at the light frequency, but it always oriented along one axis in space, in a plane perpendicular to the direction of light propagation. In other words, an electric field vector that points in just one direction along this plane is linearly polarized.

It is advantageous to have pump sources that are depolarized. Some methods of depolarizing such pump sources involve orientating and combining at least two pump sources via a polarization-combining element such that their linear polarization offsets each other to achieve a depolarized output. In other words, the electric field vectors oriented along a plane perpendicular to the direction of light propagation are pointing in orthogonal directions to substantially become unpolarized. However, complete or partial failure of one pump source can cause the combined output to become polarized.

Accordingly, there is a need for a system and method for depolarizing the output of an optical pump assembly such that the output is depolarized irrespective of the polarization state of an earlier pump assembly depolarization configuration.

### SUMMARY OF THE INVENTION

An optical amplifier consistent with the present invention includes a pump assembly configured to provide a pump assembly output having a polarization state that is normally depolarized, and a depolarizing device. The depolarizing device is configured to receive the pump assembly output and provide a depolarized output that is depolarized irrespective of the polarization state of the pump assembly output. The pump assembly may include a plurality of pump sources, the polarized outputs of which are combined to provide the pump assembly output.

An optical communication system consistent with the invention includes a transmitter for transmitting an optical signal on an optical information channel and an amplifier consistent with the invention coupled to the information channel. A pump system consistent with the present invention includes a pump assembly and depolarizing device consistent with the present invention. A method of pumping a fiber segment consistent with the invention includes: combining outputs of a plurality of pump sources to provide pump assembly output having a polarization state that is normally depolarized; depolarizing the pump assembly output to provide a depolarized output; and coupling the depolarized output to the fiber segment.

### BRIEF DESCRIPTION OF THE DRAWINGS

For a better understanding of the present invention, together with other objects, features and advantages, reference should be made to the following detailed description which should be read in conjunction with the following figures wherein like numerals represent like parts:
FIG. 1 is a block diagram of an exemplary optical communication system consistent with the present invention;
FIG. 2 is block diagram of an exemplary amplifier consistent with the present invention;
FIG. 3 is a block diagram of a simplified pump system including a pump assembly and depolarizing device consistent with the present invention;
FIG. 4 is a block diagram illustrating exemplary pump sources consistent with the present invention that may be included as part of the exemplary pump assembly illustrated in FIG. 3; and
FIG. 5 is an exemplary depolarizing device.

### DETAILED DESCRIPTION

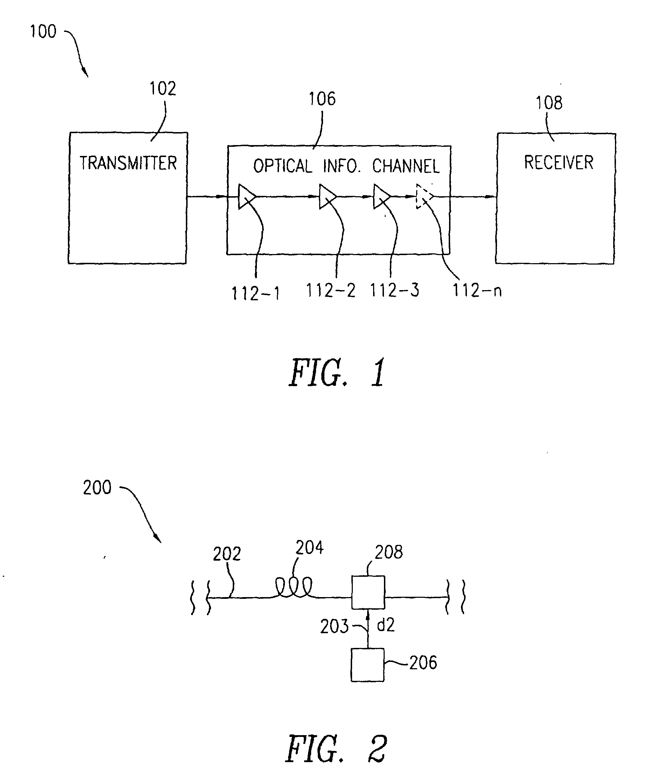

Turning to FIG. 1, there is illustrated an exemplary optical communication system 100 consistent with the present invention. Those skilled in the art will recognize that the system 100 has been depicted as a highly simplified point-to-point system for ease of explanation. The optical communication system 100 includes a transmitter 102 and a receiver 108 connected via an optical information channel 106.

At the transmitter, data may be modulated on a plurality of optical wavelengths for transmission over the optical information channel 106. Depending on system characteristics and requirements, the optical information channel 106 may include an optical fiber waveguide, optical amplifiers 112-1, 112-2, 112-3, ... 112-n, optical filters, dispersion compensating modules, and other active and passive components. A variety of configurations for each of these elements will be known to those skilled in the art. For clarity, only optical amplifiers 112-1, 112-2, 112-3, ... 112-n are illustrated in the optical information channel 106. The optical amplifiers may be Raman amplifiers, rare earth doped fiber amplifiers, e.g., EDFAs, or hybrid Raman/EDFAs. Advantageously, to provide improved signal quality the optical amplifiers 112-1, 112-2, 112-3, ... 112-n may include a pump depolarization system in a configuration to be described in greater detail below.

FIG. 2 illustrates a simplified block diagram of an exemplary Raman optical amplifier 200 that includes a depolarized pump system 206 consistent with the present invention. The Raman amplifier 200 includes a fiber transmission path 202 having a segment 204 in which Raman gain is generated by coupling energy from a depolarized pump system 206 through a coupler 208. Generally, Raman gain is generated through the process of Stimulated Raman Scattering by pumping the fiber segment 204 at various pump powers and wavelengths to achieve a desired gain characteristic. The desired gain characteristic may cover a range of transmitted wavelengths in a WDM or a DWDM system. Various types of couplers 208 are known and may include optical couplers or a multiplexer for combining the pump energy into the fiber. A depolarized pump system 206 consistent with the present invention may provide a depolarized beam d2 to the coupler 208 via a fiber 203 that may be either a polarization maintaining (PM) fiber or a regular single mode (SM) fiber.

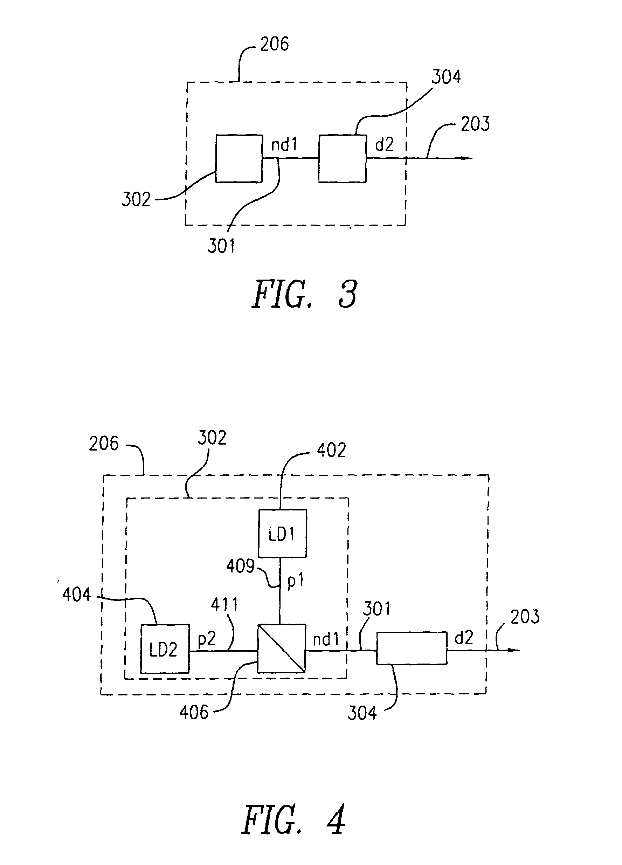

FIG. 3 illustrates an exemplary depolarized pump system 206 consistent with the invention. The pump system 206 includes a pump assembly 302 and a depolarizing device 304. The pump assembly 302 may include a variety of pump sources in a wide variety of offsetting configurations in order to provide a normally depolarized beam nd1 to the depolarizing device 304 via a first polarization maintaining fiber 301. The depolarizing device 304 may, in turn, provide a depolarized beam d2 to the coupler 208 of the exemplary Raman amplifier 200 via a separate fiber 203 that may be either a PM fiber or a regular SM fiber.

In the event of failure of one or more pump sources, the normally depolarized beam nd1 may become polarized. Advantageously, however, the depolarizing device 304 still provides a depolarized beam d2 on the polarizing maintaining fiber. Accordingly, a reliable depolarizing system and method are realized.

Turning to FIG. 4, there is illustrated an exemplary pump assembly 302 consistent with the present invention. In general, the assembly 302 may include a first laser diode 402 and a second laser diode 404 coupled to a polarization-combining element 406 via associated polarization maintaining fibers 409, 411. The polarization combining element 406 may be a cube or any combination of polarization selective elements known to those skilled in the art. The first laser diode 402 may output a first linearly polarized beam p1 that may propagate through an associated polarization maintaining fiber 409 to the polarization-combining element 406. Similarly, the second laser diode 404 may output a second linearly polarized beam p2 that may propagate through an associated polarization maintaining fiber 411 to the polarization-combining element 406.

Each polarized beam p1, p2 maintains its polarization as it travels through its associated polarization maintaining fibers 409, 411. Advantageously, each polarized beam p1, p2 is offsetting to the other such that their combination produces a normally depolarized beam ndl. In other words, the electric field vectors oriented along a plane perpendicular to the direction of light propagation are equal in amplitude in orthogonal directions to substantially remove polarization.

Similar to FIG. 3, the normally depolarized beam nd1 propagates via a polarization maintaining fiber 301 to the depolarizing device 304. The depolarizing device is configured to depolarize its input, i.e., the beam nd1 in the illustrated exemplary embodiment. As such, the depolarizing device 304 may still provide a depolarized beam d2 in the event that a fault condition in the pump assembly 302 causes the normally depolarized beam nd1 to become polarized.

For example, if the first laser diode 402 and second laser diode 404 are set at relatively equal pump powers and one completely fails, the normally depolarized beam nd1 would be a polarized source at half its normal power output. In this instance, the depolarizing device 304 would still provide a depolarized beam d2, albeit at half the pump assembly's normal power. Thus, the depolarized pump system 206 provides added reliability to protect against fault conditions in the pump assembly 302.

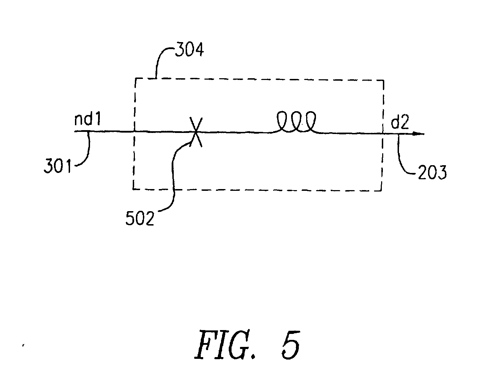

FIG. 5 illustrates an exemplary known depolarizing device 304 that may be utilized in a depolarizing pump system 206 consistent with the present invention for sufficiently wide linewidth lasers such as grating stabilized fabry-perot lasers. In the exemplary depolarizing device 304, a polarization maintaining fibers 301, and a separate fiber 203 are joined at a splice 502 in such a manner that the axes of polarization of the two fibers 301, 203 form a 45 degree angle with respect to each other. The length of the fiber 203 is chosen in accordance with the linewidth of the laser and the birefringence of the PM fiber 301 to achieve the desired degree of polarization. As a result of the splice, the linearly polarized light beam nd1 is converted into a depolarized light beam d2. If the output fiber 203 is a PM fiber, it may be joined via coupler 208 to a single mode fiber. A variety of other depolarizing devices are also known to those skilled in the art. For example, a wedge or cube made of birefringent material that has an input polarization preferably at 45 degrees relative to its optical axis may also be used.

The embodiments that have been described herein, however, are but some of the several which utilize this invention and are set forth here by way of illustration but not of limitation. It is obvious that many other embodiments, which will be readily apparent to those skilled in the art, may be made without departing materially from the scope of the invention.

## Claims

1. An optical amplifier comprising:
a pump assembly configured to provide a pump assembly output having a polarization state that is normally depolarized; and
a depolarizing device configured to receive said pump assembly output and provide a depolarized output that is depolarized irrespective of said polarization state of said pump assembly output, said depolarized output being coupled to a fiber segment for establishing optical signal gain.

2. The amplifier of claim 1, wherein said pump assembly output propagates through a first polarization-maintaining fiber and said depolarized output is coupled to and propagates through a second fiber.

3. The amplifier of claim 1, wherein said pump assembly comprises a plurality of pump sources, each said pump sources providing an associated polarized output.

4. The amplifier of claim 3, further comprising a polarization-combining element configured to accept each said polarized output and provide said pump assembly output having said polarization state that is normally depolarized.

5. The amplifier of claim 4, wherein each said pump source is coupled to said polarization-combining element by an associated polarization-maintaining fiber.

6. The amplifier of claim 5, wherein said plurality of pump sources includes first and second pumps having orthogonal polarizations.

7. The amplifier of claim 3, wherein said plurality of pump sources includes first and second pumps, each having orthogonal polarizations.

8. The amplifier of claim 3, wherein at least one of said plurality of pump sources is a laser diode.

9. The amplifier of claim 1, wherein said depolarizing device comprises a 45-degree splice of first and second fibers.

10. An optical communication system comprising a transmitter configured to transmit a plurality of optical signals, each at one of a plurality of wavelengths, over an optical information channel, said optical information channel comprising an optical amplifier, according to claim 1.

11. The system of claim 10, wherein said pump assembly output propagates through a first polarization-maintaining fiber and said depolarized output is coupled to and propagates through a second fiber.

12. The system of claim 10, wherein said pump assembly comprises a plurality of pump sources, each of said pump sources providing an associated polarized output.

13. The system of claim 12, further comprising a polarization-combining element configured to accept each said polarized output and provide said pump assembly output having said polarization state that is normally depolarized.

14. The system of claim 13, wherein each said pump source is coupled to said polarization-combining element by an associated polarization-maintaining fiber.

15. The system of claim 14, wherein said plurality of pump sources includes a first and second pump having orthogonal polarizations.

16. The system of claim 12, wherein said plurality of pump sources includes first and second pumps having orthogonal polarizations.

17. The system of claim 12, wherein at least one of said plurality of pump sources is a laser diode.

18. The system of claim 10, wherein said depolarizing device comprises a 45-degree splice of first and second fibers.

19. The system of claim 18, wherein said first and second fibers are polarization maintaining fibers.

20. A pump system for use in an optical communication system comprising:
a pump assembly configured to provide a pump assembly output having a polarization state that is normally depolarized; and
a depolarizing device configured to receive said pump assembly output and provide a depolarized output that is depolarized irrespective of said polarization state of said pump assembly output.

21. The system of claim 20, wherein said pump assembly output propagates through a first polarization-maintaining fiber and said depolarized output propagates through a second fiber.

22. The system of claim 20, wherein said pump assembly comprises a plurality of pump sources, each of said pump sources providing an associated polarized output.

23. The system of claim 20, further comprising a polarization-combining element configured to accept each said polarized output and provide said pump assembly output having said polarization state that is normally depolarized.

24. The system of claim 23, wherein each said pump source is coupled to said polarization-combining element by an associated polarization-maintaining fiber.

25. The system of claim 24, wherein said plurality of pump sources includes a first and second pump having orthogonal polarizations.

26. A method of pumping a fiber segment comprising:
combining outputs of a plurality of pump sources to provide pump assembly output having a polarization state that is normally depolarized;
depolarizing said pump assembly output to provide a depolarized output; and
coupling said depolarized output to said fiber segment.

27. The method of claim 26, wherein each of said pump sources has an associated linear polarization.

## Patentansprüche

1. Optischer Verstärker, umfassend:
einen Pumpaufbau, der derart ausgebildet ist, um einen Pumpaufbauausgang mit einem Polarisationszustand bereitzustellen, der normalerweise depolarisiert ist; und
eine Depolarisierungseinrichtung, die derart ausgebildet ist, um den Pumpaufbauausgang zu empfangen und einen depolarisierten Ausgang bereitzustellen, der unabhängig vom Polarisationszustand des Pumpaufbauausgangs ist, wobei der depolarisierte Ausgang mit einem Lichtwellenleitersegment zum Etablieren einer optischen Signalverstärkung gekoppelt ist.

2. Verstärker nach Anspruch 1, wobei der Pumpaufbauausgang sich durch einen ersten polarisationsaufrechterhaltenden Lichtwellenleiter fortpflanzt und der depolarisierte Ausgang gekoppelt ist mit einem und sich durch einen zweiten Lichtwellenleiter fortpflanzt.

3. Verstärker nach Anspruch 1, wobei der Pumpaufbau eine Vielzahl von Pumpquellen umfaßt, wobei jede Pumpquelle einen assoziierten, polarisierten Ausgang bereitstellt.

4. Verstärker nach Anspruch 3, weiter umfassend ein Polarisationsverbindungs-Element, das derart ausgebildet ist, um jeden polarisierten Ausgang zu akzeptieren und einen Pumpaufbauausgang mit einem Polarisationszustand bereitzustellen, der normalerweise depolarisiert ist.

5. Verstärker nach Anspruch 4, wobei jede Pumpquelle mit dem Polarisationsverbindungs-Element durch einen assoziierten polarisationsaufrechterhaltenden Lichtwellenleiter gekoppelt ist.

6. Verstärker nach Anspruch 5, wobei die Vielzahl der Pumpquellen eine erste und zweite Pumpe mit orthogonalen Polarisierungen aufweist.

7. Verstärker nach Anspruch 3, wobei die Vielzahl der Pumpquellen eine erste und zweite Pumpe umfaßt, wobei jede orthogonale Polarisationen aufweist.

8. Verstärker nach Anspruch 3, wobei wenigstens eine der Vielzahl der Pumpquellen eine Laserdiode ist.

9. Verstärker nach Anspruch 1, wobei die Depolarisationseinrichtung eine 45-Grad-Verbindungsstelle des ersten und zweiten Lichtwellenleiters umfaßt.

10. Optisches Kommunikationssystem, umfassend einen Sender, der derart ausgebildet ist, um eine Vielzahl optischer Signale zu senden, jedes bei einer der Vielzahl von Wellenlängen über einen optischen Informationskanal, wobei der optische Informationskanal einen optischen Verstärker nach Anspruch 1 umfaßt.

11. System nach Anspruch 10, wobei der Pumpaufbauausgang sich durch einen ersten polarisationsaufrechterhaltenden Lichtwellenleiter fortpflanzt und der Depolarisationsausgang gekoppelt ist mit einem und sich durch einen zweiten Lichtwellenleiter fortpflanzt.

12. System nach Anspruch 10, wobei der Pumpaufbau eine Vielzahl von Pumpquellen umfaßt, wobei jede der Pumpquellen einen assoziierten, polarisierten Ausgang bereitstellt.

13. System nach Anspruch 12, weiter umfassend ein Polarisationsverbindungs-Element, das derart ausgebildet ist, um jeden polarisierten Ausgang zu akzeptieren und den Pumpaufbauausgang mit einem Polarisationszustand bereitzustellen, der normalerweise depolarisiert ist.

14. System nach Anspruch 13, wobei jede Pumpquelle mit den Polarisationsverbindungs-Elementen durch einen assoziierten, polarisationsaufrechterhaltenden Lichtwellenleiter gekoppelt ist.

15. System nach Anspruch 14, wobei die Vielzahl der Pumpquellen eine erste und zweite Pumpe mit orthogonalen Polarisationen umfaßt.

16. System nach Anspruch 12, wobei die Vielzahl der Pumpquellen eine erste und zweite Pumpe mit orthogonalen Polarisationen umfaßt.

17. System nach Anspruch 12, wobei wenigstens eine der Vielzahl der Pumpquellen eine Laserdiode ist.

18. System nach Anspruch 10, wobei die Depolarisationseinrichtung eine 45-Grad-Verbindungsstelle der ersten und zweiten Lichtwellenleiter umfaßt.

19. System nach Anspruch 18, wobei der erste und zweite Lichtwellenleiter polarisationsaufrechterhaltende Lichtwellenleiter sind.

20. Pumpsystem zur Verwendung in einem optischen Kommunikationssystem, umfassend:
einen Pumpaufbau, der ausgebildet ist, um einen Pumpaufbauausgang mit einem Polarisationszustand bereitzustellen, der normalerweise depolarisiert ist und
eine Depolarisationseinrichtung, die ausgebildet ist, um den Pumpaufbauausgang zu empfangen und einen depolarisierten Ausgang bereitzustellen, der unabhängig von dem Polarisationszustand des Pumpaufbauausgangs ist.

21. System nach Anspruch 20, wobei der Pumpaufbauausgang sich durch einen ersten polarisationsaufrechterhaltenden Lichtwellenleiter fortpflanzt und der depolarisierte Ausgang sich durch einen zweiten Lichtwellenleiter fortpflanzt.

22. System nach Anspruch 20, wobei der Pumpaufbau eine Vielzahl von Pumpquellen umfaßt, wobei jede Pumpquelle einen assoziierten, polarisierten Ausgang bereitstellt.

23. System nach Anspruch 20, weiter umfassend ein Polarisationsverbindungs-Element, das derart ausgebildet ist, um jeden polarisierten Ausgang zu akzeptieren und den Pumpaufbauausgang mit einem Polarisationszustand bereitzustellen, der normalerweise depolarisiert ist.

24. System nach Anspruch 23, wobei jede Pumpquelle mit dem Polarisationsverbindungs-Element durch einen assoziierten, polarisationsaufrechterhaltenden Lichtwellenleiter gekoppelt ist.

25. System nach Anspruch 24, wobei eine Vielzahl von Pumpquellen eine erste und zweite Pumpe mit orthogonalen Polarisationen umfaßt.

26. Verfahren zum Pumpen eines Lichtwellenleitersegments, umfassend:
Kombinieren der Ausgänge einer Vielzahl von Pumpquellen, um einen Pumpaufbauausgang bereitzustellen, der einen Polarisationszustand aufweist, der normalerweise depolarisiert ist;
Depolarisieren des Pumpaufbauausgangs, um einen depolarisierten Ausgang bereitzustellen; und
Koppeln des depolarisierten Ausgangs mit dem Lichtwellensegment.

27. Verfahren nach Anspruch 26, wobei jede Pumpquelle eine assoziierte Linearpolarisation aufweist.

## Revendications

1. Amplificateur optique comprenant :
un dispositif de pompe configuré pour fournir une sortie du dispositif de pompe ayant un état de polarisation qui est normalement dépolarisé ; et
un dispositif de dépolarisation configuré pour recevoir ladite sortie du dispositif de pompe et fournir une sortie dépolarisée qui est dépolarisée indépendamment dudit état de polarisation de ladite sortie du dispositif de pompe, ladite sortie dépolarisée étant couplée à un segment de fibre pour établir un gain de signal optique.

2. Amplificateur selon la revendication 1, dans lequel ladite sortie du dispositif de pompe se propage à travers une première fibre de maintien de polarisation et ladite sortie dépolarisée est couplée à et se propage à travers une seconde fibre.

3. Amplificateur selon la revendication 1, dans lequel ledit dispositif de pompe comprend une pluralité de sources de pompe, chacune desdites sources de pompe fournit une sortie polarisée associée.

4. Amplificateur selon la revendication 3, comprenant en outre un élément à combinaison de polarisations configuré pour accepter chacune desdites sorties polarisées et fournir ladite sortie du dispositif de pompe ledit état de polarisation qui est normalement dépolarisé.

5. Amplificateur selon la revendication 4, dans lequel chacune desdites sources de pompe est couplée audit élément à combinaison de polarisations par une fibre de maintien de la polarisation associée.

6. Amplificateur selon la revendication 5, dans lequel ladite pluralité des sources de pompe comprend une première pompe et une seconde pompe ayant des polarisations orthogonales.

7. Amplificateur selon la revendication 3, dans lequel ladite pluralité de sources de pompe comprend une première pompe et une seconde pompe, chacune ayant des polarisations orthogonales.

8. Amplificateur selon la revendication 3, dans lequel au moins une source parmi ladite pluralité de sources de pompe est une diode laser.

9. Amplificateur selon la revendication 1, dans lequel ledit dispositif de dépolarisation comprend un raccord à 45 degrés de la première et la seconde fibres.

10. Système de communication optique comprenant un émetteur configuré pour émettre une pluralité de signaux optiques, chacun à une de la pluralité de longueurs d'onde, sur un canal d'information optique, ledit canal d'information optique comprenant un amplificateur optique selon la revendication 1.

11. Système selon la revendication 10, dans lequel ladite sortie du dispositif de pompe se propage à travers une première fibre de maintien de polarisation et ladite sortie dépolarisée est couplée à et se propage à travers une seconde fibre.

12. Système selon la revendication 10, dans lequel ledit dispositif de pompe comprend une pluralité de sources de pompe, chacune desdites sources de pompe fournit une sortie polarisée associée.

13. Système selon la revendication 12, comprenant en outre un élément à combinaison de polarisations configuré pour accepter chacune desdites sorties polarisées et fournit ladite sortie du dispositif de pompe ayant ledit état de polarisation qui est normalement polarisé.

14. Système selon la revendication 13, dans lequel chacune desdites sources de pompe est couplée audit élément à combinaison de polarisations par une fibre de maintien de polarisation associée.

15. Système selon la revendication 14, dans lequel ladite pluralité de sources de pompe comprend une première pompe et une seconde pompe ayant des polarisations orthogonales.

16. Système selon la revendication 12, dans lequel ladite pluralité des sources de pompe comprend une première pompe et une seconde pompe ayant des polarisations orthogonales.

17. Système selon la revendication 12, dans lequel au moins une desdites pluralité de sources de pompe est une diode laser.

18. Système selon la revendication 10, dans lequel ledit dispositif de dépolarisation comprend un raccord à 45 degrés de la première et la seconde fibres.

19. Système selon la revendication 18, dans lequel lesdites première et seconde fibres sont des fibres de maintien de polarisation.

20. Système de pompe pour servir dans un système de communication optique comprenant :
un dispositif de pompe configuré pour fournir une sortie du dispositif de pompe ayant un état de polarisation qui est normalement dépolarisé ; et
un dispositif de dépolarisation configuré pour recevoir ladite sortie du dispositif de pompe et fournir une sortie dépolarisée qui est dépolarisée indépendamment dudit état de polarisation de ladite sortie du dispositif de pompe.

21. Système selon la revendication 20, dans lequel ladite sortie du dispositif de pompe se propage à travers une première fibre de maintien de polarisation et ladite sortie dépolarisée se propage à travers une seconde fibre.

22. Système selon la revendication 20, dans lequel ledit système de pompe comprend une pluralité de sources de pompe, chacune desdites sources de pompe fournit une sortie polarisée associée.

23. Système selon la revendication 20, comprenant en outre un élément à combinaison de polarisations configuré pour accepter chacune desdites sorties polarisées et fournir ladite sortie du dispositif de pompe ayant ledit état de polarisation qui est normalement dépolarisé.

24. Système selon la revendication 23, dans lequel chacune desdites sources de pompe est couplée audit élément à combinaison de polarisations par une fibre de maintien de polarisation associée.

25. Système selon la revendication 24, dans lequel ladite pluralité de sources de pompe comprend une première pompe et une seconde pompe ayant des polarisations orthogonales.

26. Procédé pour pomper un segment de fibre comprenant :
la combinaison de sorties d'une pluralité de sources de pompe pour fournir la sortie du dispositif de pompe ayant un état de polarisation qui est normalement dépolarisé ;
la dépolarisation de ladite sortie du dispositif de pompe pour fournir une sortie dépolarisée ; et
le couplage de ladite sortie dépolarisée audit segment de fibre.

27. Procédé selon la revendication 26, dans lequel chacune desdites sources de pompe a une polarisation linéaire associée.
